# EUROPÄISCHE PATENTSCHRIFT

(11) **EP 4 470 883 B1**
(45) Veröffentlichungstag und Bekanntmachung des Hinweises auf die Patenterteilung: **31.12.2025**
(21) Anmeldenummer: 24169112.0
(22) Anmeldetag: 09.04.2024
(51) Int. Cl.: B62D 7/14, B62D 13/06

(54) **HYDRAULISCHE SCHALTUNG MIT HYDRAULISCH UNTERSTÜTZTER RÜCKSTELLUNG DES KOLBENS IN EINEM HYDRAULIKZYLINDER**
HYDRAULIC CIRCUIT WITH HYDRAULICALLY ASSISTED RETURN OF THE PISTON IN A HYDRAULIC CYLINDER
CIRCUIT HYDRAULIQUE AVEC RAPPEL HYDRAULIQUE ASSISTÉ DU PISTON DANS UN VÉRIN HYDRAULIQUE

(30) Priorität: 31.05.2023 DE 102023114318
(43) Veröffentlichungstag der Anmeldung: 04.12.2024
(73) Patentinhaber: Weber-Hydraulik GmbH, 74363 Güglingen (DE)
(72) Erfinder: Winkler, Torsten, 74397 Pfaffenhofen (DE)
(74) Vertreter: LBP Lemcke, Brommer & Partner Patentanwälte mbB

(56) Entgegenhaltungen:
- WO-A1-2022/018135

## Beschreibung

Die vorliegende Erfindung betrifft eine hydraulische Schaltung mit einem Hydraulikzylinder, der im Fehler- oder Deaktivierungsfall in eine sichere Ausfallstellung gebracht werden kann. Eine solche Schaltung kann insbesondere für ein Lenksystem eines mehrachsigen Fahrzeugs eingesetzt werden.

Eine hydraulische Schaltung nach dem Oberbegriff des Anspruchs 1 ist aus der WO 2022/018135 A1 bekannt. Diese beschreibt eine hydraulische Hinterachslenkung mit einem Lenkzylinder, der einen Zylinderraum, einen dichtend in dem Zylinderraum gelagerten Kolben, der den Zylinderraum in zwei Arbeitsräume unterteilt, und mindestens eine von dem Kolben getragene Kolbenstange aufweist. Über eine mechanische schaltbare Ventilanordnung mit drei Schaltstellungen, die von einem mechanischen Tastelement, welches mit der Kolbenstange zusammenwirkt, umgeschaltet wird, wird in Abhängigkeit der Auslenkung des Kolbens einer der Arbeitsräume mit einer Tankrückleitung verbunden, um im Fehlerfall eine Rückstellbewegung der Kolbenstange in die Mittelstellung zu ermöglichen. In der mittleren Schaltstellung, die der Geradeausstellung der Lenkung entspricht, ist die Verbindung zwischen den Arbeitsräumen und der Tankrückleitung gesperrt. Die Lenkungsschaltung ermöglicht damit eine adhäsionsgelenkte Rückstellungbewegung sowie anschließende Verriegelung der Lenkung in die Mittelstellung im Fehler- oder Deaktivierungsfall.

Im Bereich der Hinterachslenkungen werden häufig Achsen eingesetzt, die aufgrund ihrer Bauform beim Geradeausfahren Adhäsionslenkkräfte aufbauen, die den Lenkzylinder in der Geradeausposition halten bzw. sofern sich die Achse noch nicht in der Geradeausstellung befindet, entsprechende Rückstellkräfte aufbaut, um die Achsen zu zentrieren. Diese Eigenschaft wird durch einen konstruktiven Nachlauf der Achse erzielt, der dieses gewünschte Verhalten aufweist. Dieser Nachlauf funktioniert allerdings nicht bei Rückwärtsfahrt. In diesem Fall würde sich die Achse auf den maximal möglichen Lenkwinkel auslenken und damit ein Rückwärtsfahren des mehrachsigen Fahrzeugs zumindest erschweren, wenn nicht sogar unmöglich machen.

Daneben werden außerdem auch Achsen ohne konstruktiven Nachlauf verwendet. Insbesondere angetriebene Hinterachsen sind in der Regel nicht mit einem entsprechenden Nachlauf versehen, so dass auch bei solchen Achsen eine adhäsionsgesteuerte Zentrierung nicht erreicht werden kann.

Der Erfindung liegt die Aufgabe zugrunde, eine hydraulische Schaltung der eingangs genannten Art anzugeben, welche die Nachteile des Standes der Technik zumindest teilweise überwindet, und die bei einer Verwendung in einem Hinterachslenksystem insbesondere auch bei Rückwärtsfahrt und bei nicht adhäsionsgelenkten Hinterachsen einen sicheren Ausfallzustand erreichen kann.

Die Aufgabe wird gelöst durch die Merkmale des Anspruchs 1. Vorteilhafte Ausgestaltungen sind den abhängigen Ansprüchen zu entnehmen.

Bei einer hydraulischen Schaltung der Eingangs genannten Art ist erfindungsgemäß einen Druckspeicher vorgesehen, welcher im Normalbetrieb mit einem an einem Pumpenanschluss der hydraulischen Schaltung anliegenden Druck aufgeladen wird, und die Ventilanordnung ausgebildet ist, in dem ersten Schaltzustand den zweiten Arbeitsraum mit dem Druckspeicher zu verbinden, um eine aktive Rückstellbewegung des Kolbens in die eine sichere Ausfallstellung zu bewirken, in der zweiten Schaltstellung eine Verbindung zwischen den Arbeitsräumen und dem Druckspeicher zu sperren und in der dritten Schaltstellung den ersten Arbeitsraum mit dem Druckspeicher zu verbinden, um eine entgegengesetzte Rückstellbewegung des Kolbens in die die sichere Ausfallstellung zu bewirken.

Durch Integration eines vergleichsweise kleinen Druckspeichers gelingt es, den Hydraulikzylinder auch ohne Einwirkung äußerer Kräfte im Fehler- oder Deaktivierungsfall in den sicheren Ausfallzustand zu bringen. Da über die mechanische Abtastung der Kolbenstellung der Auslenkungszustand in der Ventilanordnung abgebildet werden kann, muss der Druckspeicher lediglich so groß ausgelegt sein, dass bei maximaler Auslenkung eine einmalige Rückstellung in die sichere Ausfallstellung erreicht werden kann, in der der Kolben dann hydraulisch und/oder mechanisch arretiert wird.

Zweckmäßigerweise ist die Ventilanordnung hierbei hydraulisch, pneumatisch und/oder elektrisch deaktivierbar ausgebildet ist. Im Normalbetrieb der hydraulischen Schaltung ist die Ventilanordnung in der Regel deaktiviert bzw. deren Verbindung zum Hydraulikzylinder unterbrochen, sodass Druckspeicher und Tankentlastung keinen Einfluss auf den Normalbetrieb der hydraulischen Schaltung haben. Im Fehler- oder Deaktivierungsfall erfolgt hingegen eine automatische Aktivierung der Ventilanordnung, sodass eine automatische Zwangszentrierung des Hydraulikzylinders stattfindet.

Bei einer bevorzugten Ausführungsform erfolgt die Deaktivierung der Ventilanordnung durch diese selbst, indem die Ventilanordnung eine vierte Schaltstellung aufweist, in der die Verbindung zwischen den Arbeitsräumen und der Tankrückleitung (T) sowie zwischen den Arbeitsräumen und dem Druckspeicher gesperrt ist. Hierzu wird ein vom Hydraulikzylinder separater hydraulischen Aktuator vorgesehen, welcher ausgebildet ist, bei Ansteuerung das Tastelement aus der Zusammenwirkung mit dem Kolben oder der Kolbenstange abzuheben und die Ventilanordnung in die vierte Schaltstellung zu schalten.

Auf diese Weise werden die Vorteile einer mechanischen Speicherung des Lenkzustandes, also an welcher Stelle sich die Kolbenstange befindet, als Schaltzustand der Ventilanordnung mit dem Vorteil einer hydraulischen Deaktivierung der Ventilanordnung im Normalbetrieb kombiniert. Hierzu kann an geeigneter Stelle an der Druckversorgung ein Vorsteuerdruck abgegriffen werden, über welchen jeweils zu Beginn des Druckaufbaus (Starten des Fahrzeugs) die Ventilanordnung hydraulisch deaktiviert wird und im Fehler- oder Deaktivierungsfall dann dieser hydraulische Vorsteuerdruck über eine Tankrückleitung abgebaut wird, um die Ventilanordnung zu aktivieren. Somit findet ausschließlich im Fehler- oder Deaktivierungsfall eine Ansteuerung der Bedienanordnung in der Form statt, dass die eingangs beschriebenen drei Schaltpositionen eingenommen werden können. Im Normalbetrieb befindet sich hingegen die Schaltungsanordnung in der vierten Schaltposition, in der eine Verbindung der Arbeitsräume zur Tankrückleitung verhindert ist. Im Fehler- bzw. Deaktivierungsfall, wenn beispielsweise durch einen Stromausfall kein hydraulischer Vorsteuerdruck mehr anliegt, steht das mechanische Tastelement wieder in Wirkverbindung mit Kolben oder Kolbenstange und schaltet die Schaltungsanordnung in Abhängigkeit der Auslenkung des Kolbens zwischen den drei Schaltstellungen um. Hierdurch wird, gegebenenfalls mit weiteren Hydraulikkomponenten, bewirkt, dass sich der Kolben durch von außen einwirkenden Kräfte stets nur in Richtung der sicheren Ausfallstellung, der im Falle eines Lenksystems in der Regel der Geradeausstellung der Lenkung entspricht, bewegen kann.

Eine Aktivierung der automatischen Zentrierung des Hydraulikzylinders kann auf einfache Weise dadurch erreicht werden, dass die zu dem hydraulischen Aktuator führende Steuerleitung über ein elektrisch betätigtes, stromlos geöffnetes Absperrventil mit der Tankrückleitung verbunden wird. Wird das Absperrventil stromlos geschaltet bzw. fällt die Stromversorgung aus, so öffnet das Absperrventil die Verbindung zum Tank und der Steuerdruck in der Steuerleitung fällt ab. Das Tastelement, welches nun nicht mehr über den ersten Aktuator aus der Zusammenwirkung mit dem Kolben bzw. der Kolbenstange gehalten wird, schaltet die Ventilanordnung je nach Auslenkung des Kolbens in einen der drei Schaltstellungen, die zur Zentrierung des Kolbens führen.

Das Absperrventil kann somit einerseits zur Deaktivierung über ein Steuergerät stromlos geschaltet und somit geöffnet werden, wenn beispielsweise eine Deaktivierung der Hinterachslenkung beispielsweise bei höheren Geschwindigkeiten gewünscht ist. Andererseits wird die Sicherheitsschaltung zur Zentrierung des Hydraulikzylinders bei einem Defekt, der zu einem Ausfall der Stromversorgung führt, automatisch aktiviert, indem das Absperrventil selbsttätig öffnet.

Zweckmäßigerweise besitzt die Ventilanordnung zwei vorzugsweise symmetrisch aufgebaute Teilschaltungen, von denen die erste Teilschaltungen in einem ersten und einem dritten Schaltzustand in Abhängigkeit der Auslenkung des Kolbens jeweils einen der Arbeitsräume mit dem Tankanschluss verbindet und gleichzeitig die andere Teilschaltungen den jeweils anderen der Arbeitsräume mit dem Druckspeicher verbindet. Hierbei können beide Teilschaltungen über das gemeinsame Tastelement betätigt und mittels desselben gemeinsame Aktuator deaktiviert werden.

Die Teilschaltungen können wahlweise jeweils mit einem normal geöffnetem und ein normal geschlossenes Schaltventil, mit zwei gegensinnig angeordneten, normal geschlossenen Schaltventile oder mit je einem 3/4 -Wegeventil mit drei Anschlüssen und vier Schaltstellungen realisiert werden.

Alternativ können die Funktionen der Ventilanordnung auch mit einem einzigen 4/4-Wegeventil umgesetzt werden, das dann die vollständige Funktionalität in einem Bauteil beinhaltet. Das 4/4-Wegeventil weist dabei mindestens vier Anschlüssen und vier Schaltstellungen auf, wobei es in der ersten und dritten Schaltstellung als Umschalter zwischen den Arbeitsräumen einerseits und Tankanschluss und Druckspeicher (30) anderseits wirkt und in der zweiten und vierten Schaltstellung die Verbindung zwischen den Arbeitsräumen und Tankanschluss sowie Druckspeicher sperrt.

Bei einer Weiterbildung umfasst die hydraulische Schaltung in mindestens einer zu dem Hydraulikzylinder führenden Druckleitung ein hydraulisch geschaltetes, drucklos geschlossenes Absperrventil, welches an seinem Steueranschluss mit dem Druckspeicher verbunden ist und erst öffnet, wenn der Druckspeicher auf einen Mindestdruckwert aufgeladen ist, der eine Rückstellbewegung des Kolbens bei maximaler Auslenkung gewährleistet. Hierdurch wird auf einfache und fehlerrobuste Weise erreicht, dass beispielsweise nach einem Systemstart eine Auslenkung des Hydraulikzylinders im Normalbetrieb erst dann erfolgen kann, wenn sichergestellt ist, dass der Druckspeicher bereits soweit aufgeladen ist, dass im Fehlerfall eine sichere Rückstellung in den sicheren Ausfallzustand erreicht werden kann.

Bei der hydraulischen Schaltung kann zweckmäßigerweise vorgesehen sein, dass von jedem der beiden Arbeitsräume jeweils eine Rückleitung zu einem Tank führt und in jeder der Rückleitungen ein hydraulisch entsperrbares Ventil, insbesondere Lasthalteventil, angeordnet ist und die hydraulisch entsperrbaren Ventile als vordruckgesteuerte Ventile ausgebildet sind, deren Steueranschluss jeweils mit einem zu dem jeweils anderen Arbeitsraum führenden Pumpenanschluss verbunden ist. Soll somit der Hydraulikzylinder ausgelenkt wird, so wird von einer Hydraulikpumpe Hydraulikmedium zu einem der Arbeitsräume gefördert. Der Druck in der zu dem Arbeitsraum führenden Druckleitung liegt an dem gegenseitigen vordruckgesteuerten Ventil an und öffnet dieses, sodass Hydraulikmedium aus dem anderen Arbeitsraum in Richtung Tank zurückströmen kann, sodass der Kolben bewegt werden kann. Liegt an keinem der Arbeitsräume Druck von der Pumpe an, so sind die vordruckgesteuerten Ventile geschlossen und der Kolben behält im Normalbetrieb seine aktuelle Position bei, ohne dass von der Pumpe ständig Druck bereitgestellt und Hydraulikmedium gefördert werden müsste.

Im Fehlerfall ist der Hydraulikzylinder nach Erreichen des sicheren Ausfallzustands, welcher in der Regel der Mittelstellung des Kolbens im Zylinder entspricht, hydraulisch arretiert, da aus keinem der Arbeitsräume Hydraulikmedium in Richtung Tank entweichen kann.

Zusätzlich zu einer hydraulischen Arretierung kann der Hydraulikzylinder mit einer mechanischen Sperrvorrichtung versehen sein, die den Kolben oder die Kolbenstange bei Erreichen der Mittelstellung innerhalb des Hydraulikzylinders mechanisch arretiert. Die mechanische Sperrvorrichtung kann grundsätzlich in beliebiger Weise ausgebildet sein und sowohl integriert in den Hydraulikzylinder also auch separat von diesem, z.B. als Sperrklinke, die auf die Kolbenstange wirkt, ausgeführt sein.

Bei einer bevorzugten Ausführungsform ist vorgesehen, dass die Sperrvorrichtung in den Hydraulikzylinder integriert ist und mindestens ein Sperrglied aufweist, welches im gesperrten Zustand von einem Verriegelungselement in einer Einrastposition gehalten wird und das Verriegelungselement über einen zweiten, von Kolben und Kolbenstange separaten, hydraulisch betätigten Aktuator zwischen einer Sperrstellung, in der das Verriegelungselement das Sperrglied in der Einrastposition hält, und einer Entsperrstellung, in der das Verriegelungselement das Sperrglied freigibt, verstellbar ist. Über den zweiten Aktuator kann somit die Verriegelungsposition bei Erreichen der Mittelstellung aktiviert und die Verriegelung wieder gelöst werden. Liegt an dem Steuereingang des zweiten Aktuators ein Steuerdruck an, so verstellt dieser das Verriegelungselement in die Entsperrstellung, sodass eine Verriegelung aufgehoben bzw. eine Verriegelung des Kolbens beim Durchlaufen der Mittelstellung verhindert wird. Liegt an dem Steuereingang des Aktuators kein Druck an, so wird das Verriegelungselement in der Mittelstellung unter Wirkung einer Rückstellfeder in seine Sperrstellung verstellt, sodass der Kolben in der Mittelposition verriegelt wird.

Bei einer bevorzugten Weiterbildung können die Steuereingänge des ersten, auf das Tastelement wirkenden Aktuators und des zweiten, auf das Verriegelungselement wirkenden Aktuators miteinander verbunden sein und mit demselben Steuerdruck beaufschlagt werden. Somit wird durch Unterbrechen des Steuerdrucks einerseits das Tastelement wieder in Zusammenwirkung mit dem Kolben bzw. der Kolbenstange gebracht und schaltet somit die Ventilanordnung, die eine Zentrierung des Kolbens innerhalb des Zylinders herbeiführt. Gleichzeitig wird anderseits die mechanische Sperrvorrichtung scharf geschaltet, sodass der Kolben bei Erreichen der Mittelposition mechanisch arretiert wird.

Vorzugsweise ist vorgesehen, dass die Ventilanordnung gegebenenfalls mit weiteren hydraulischen Schaltungselementen in einen mit dem Hydraulikzylinder in baulicher Einheit verbundenen Ventilblock integriert ist. Durch die Integration aller Schaltungselemente und der hydraulischen Fluidwege kann ganz auf hydraulische Leitungen verzichtet werden, sodass das Risiko eines Defekts und Hydraulikmittelverlust durch einen Leitungsbruch minimiert ist. Der integrierte Hydraulikblock umfasst jegliche Funktionalität, um bei Ausfall der externen Druckversorgung - sei es auch durch einen Leitungsbruch - den in baulicher Einheit integrierten Hydraulikzylinder in den sicheren Ausfallzustand zu versetzen.

Diese und weitere Merkmale und Eigenschaften der Erfindung ergeben sich aus der nachfolgenden Beschreibung von Ausführungsbeispielen anhand der Figuren. Es zeigt:
- Figur 1: einen Hydraulikplan einer hydraulischen Schaltung in einem ersten Ausführungsbeispiel umfassend eine Ventilanordnung mit zwei symmetrisch aufgebauten Teilschaltungen mit je zwei normal geschlossenen Schaltventilen,
- Figuren 2a bis d: eine alternative Ventilanordnung in ihren vier Schaltzuständen, bei der die Teilschaltungen in einem zweiten Ausführungsbeispiel jeweils als ein 3/4-Wegeventil realisiert sind.
- Figur 3: einen Hydraulikplan einer hydraulischen Schaltung in einem dritten Ausführungsbeispiel, bei dem die Funktion einer erfindungsgemäßen Ventilanordnung in einem einzigen 4/4-Wegeventil realisiert ist,
- Figuren 4a bis d: die Ventilanordnung aus Figur 3 in ihren vier Schaltzuständen,
- Figur 5: einen Hydraulikplan einer hydraulischen Schaltung in einem vierten, vereinfachten Ausführungsbeispiel mit einem Hydraulikzylinder ohne mechanische Sperrvorrichtung.

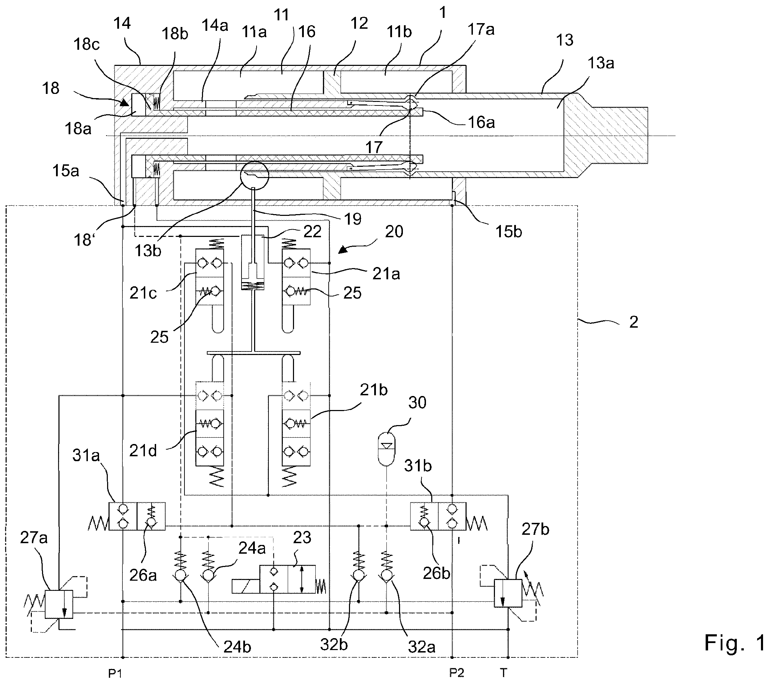

Ein erstes Ausführungsbeispiel einer hydraulischen Schaltung, die in diesem Fall als Hinterachslenkung eines mehrachsigen Fahrzeugs dient, ist schematisch in Figur 1 dargestellt. Die Schaltung umfasst einen als Lenkzylinder wirkenden Hydraulikzylinder 1 und einen in baulicher Einheit mit diesem verbundenen Ventilblock 2. Der Ventilblock 2 ist hierbei zur besseren Darstellbarkeit nicht maßstabsgetreu vergrößert und in Form eines Flussdiagramms gezeigt.

Der Hydraulikzylinder 1 umfasst einen Zylinderraum 11 mit einem darin längsbeweglich angeordneten Kolben 12, der in eine Kolbenstange 13 übergeht. Der Kolben 12 ist gegenüber der Zylinderwand des Hydraulikzylinders 1 gedichtet. Eine entsprechende Kolbendichtung an sich bekannter Bauart ist hier der besseren Übersichtlichkeit halber nicht dargestellt. Bei dem Hydraulikzylinder 1 handelt es sich um den bereits in der eingangs zitierten WO 2022/018135 A1, auf die hier zur Vermeidung unnötiger Wiederholungen vollinhaltlich Bezug genommen wird, beschriebenen Lenkzylinder.

Der Hydraulikzylinder 1 besitzt eine integrierte mechanische Sperrvorrichtung, auf die es im Rahmen der vorliegenden Erfindung im Einzelnen nicht ankommt. Die Funktion der Sperrvorrichtung sei jedoch nachfolgend kurz skizziert.

Die Kolbenstange 13 und der Kolben 12 sind mit einer Längsbohrung 13a versehen. Innerhalb des hierdurch entstandenen Hohlraums ist die Sperrvorrichtung untergebracht. Von einem Endstück 14 des Hydraulikzylinders 1 erstreckt sich ein Innenrohr 14a in den Zylinder 11 und in den Hohlraum 13a der Kolbenstange 13. Der von der Zylinderwand und dem Kolben 12 begrenzte Hohlraum auf der der Kolbenstange abgewandten Seite bildet zusammen mit dem Hohlraum 13a im Inneren der Kolbenstange 13 einen ersten Arbeitsraum 11a des Hydraulikzylinders 1, den sogenannten Kolbenraum. Das Innenrohr 14a weist zu diesem Zweck Durchlässe auf, um einen ungehinderten Fluidausgleich innerhalb des Kolbenraums zu ermöglichen. Der von der Zylinderwand des Hydraulikzylinders 1 und der Kolbenstange 13 begrenzte Hohlraum bildet einen zweiten Arbeitsraum des Hydraulikzylinders 1, den sogenannten Ringraum. Die beiden Arbeitsräume 11a, 11b haben in diesem Ausführungsbeispiel unterschiedlich große hydraulisch wirksame Flächen, sodass der Hydraulikzylinder 1 als Differentialzylinder ausgeführt ist. Grundsätzlich ist jedoch auch eine Ausführung als Gleichgangzylinder möglich und sinnvoll.

Durch Druckbeaufschlagung eines der Arbeitsräume 11a, 11b kann der Kolben 12 nach links oder rechts verstellt werden, wodurch die Kolbenstange 13 eingefahren oder ausgefahren wird. Ein erster Druckanschluss 15a ist im Endstück 14 des Hydraulikzylinders 1 angeordnet und verläuft axial durch das Innenrohr 14a bis in den Arbeitsraum 11a. Ein zweiter Druckanschluss 15b ist im Bereich eines die Kolbenstange 13 dichtend umgebenden Führungsstücks des Hydraulikzylinders 1 angeordnet und mit dem Arbeitsraum 11b verbunden.

Eine technische Besonderheit des Hydraulikzylinders 1 bildet, wie bereits erläutert, eine mechanische Sperrvorrichtung, die den Kolben 12 in dessen Mittelstellung, also einer Stellung, die der Geradeausstellung der Hinterachslenkung entspricht und einen sicheren Ausfallzustand darstellt, innerhalb des Hydraulikzylinders 1 verrastet und damit arretiert. Hierzu liegt innerhalb des Innenrohrs 14a eine in axiale Richtung bewegliche Arretierhülse 16. Diese trägt in einem Endbereich einen als Verriegelungsraste dienenden Ringwulst 16a. Als Sperrglieder dienen eine Mehrzahl umfangsverteilt um die Arretierhülse 16 angeordnete Federzungen, die an ihrem Ende jeweils eine Rastnase 17 tragen, die in einer Ringnut 17a an der Innenseite des in der Kolbenstange 13 ausgebildeten Hohlraums 13a einrasten. In axialer Richtung greift die Arretierhülse 16 mit dem Ringwulst 16a über die im Endbereich des Innenrohrs 14a angeordneten Rastnasen 17 und die an der Innenwand der hohlen Kolbenstange 13 ausgebildete Ringnut 17a. In Figur 1 sind die Rastnasen 17a in ihrer Freigabestellung gezeigt, in der der Kolben 12 frei beweglich ist. Wird die Arretierhülse 16 nach links verstellt, so drängt der Ringwulst 16a die Rastnasen 17 nach außen, sodass diese in der Ringnut 17a verrasten. Dabei verhindert der Ringwulst 16a, dass die Federzungen nach innen ausweichen können und hält somit die Rastnasen 17 in ihrer Einrastposition und sorgt so als Verriegelungselement dafür, dass der Kolben 12 arretiert ist.

Die Federzungen und Rastnasen 17 sind mit dem Innenrohr 14a verbunden und bilden eine Art Spannzange, welche wiederum über das Innenrohr 14a starr mit dem Endstück 14 des Hydraulikzylinders 1 verbunden ist.

Die Arretierhülse dient als Stellelement für die von dem Ringwulst 16a gebildeten Verriegelungsraste. Ist diese wie in Figur 1 gezeigt nach rechts verstellt, so können die Federzungen nach innen federn und die Rastnasen 17 aus ihrer Sperrstellung nach innen ausweichen. Befindet sich der Kolben 12 in seiner Mittelstellung so können die Rastnasen 17 in die Ringnut 17a eingreifen, indem die Verriegelungshülse 16 nach links verstellt wird und der Ringwulst 16a die Rastnasen 17 nach außen drückt. Sobald der Kolben 12 aus seiner Mittelstellung heraus in die eine oder andere Richtung verstellt wurde, kann die Arretierhülse 16 nicht mehr in ihre Sperrstellung zurückgestellt werden, da die Rastnasen 17 nicht mehr nach außen in die Ringnut 17a ausweichen können und der Ringwulst 16a somit nicht mehr über die Rastnasen 17 geschoben werden kann. Folglich kann, solange sich der Kolben 12 nicht in der Mittelstellung befindet, die Arretierhülse 16 nicht bewegt werden.

Die Betätigung der Arretierhülse 16 und damit eine Entriegelung des Kolbens 12 erfolgt über einen vordruckgesteuerten Aktuator 18, der in das Endstück 14 des Hydraulikzylinders 1 integriert ist. Der Aktuator 18 wird durch einen Druckraum 18a und einen Federraum 18b gebildet, die von einem beweglich gelagerten Stellkolben 18c getrennt werden. Über einen Steueranschluss 18' kann der Druckraum 18a mit einem Steuerdruck druckbeaufschlagt werden, um den Stellkolben 18c nach rechts zu verstellen. Der Stellkolben 18c ist wiederum mit der Arretierhülse 16 verbunden, um diese in ihre Entsperrstellung zu verstellen. Eine Rückstellfeder im Inneren des Federraums 18b sorgt dafür, dass der Stellkolben 18c im drucklosen Zustand eine Rückstellkraft nach links erfährt. Sobald die Kolbenstange 13 bzw. der Kolben 12 ihre Mittelposition erreicht haben und die Rastnasen 17 in Eingriff mit der Ringnut 17a gelangen und somit die Verriegelungsraste 16a freigeben, wird der Stellkolben 18c unter der Krafteinwirkung der Rückstellfeder nach links bewegt und die Arretierhülse 16 somit in ihre Sperrstellung geführt.

Im Fehlerfalle, insbesondere bei Ausfall der Bordnetzversorgung, muss eine Aktivierung der Hinterachslenkung und Zentrierung in Geradeausstellung erfolgen. Auch bei schneller Vorwärtsfahrt kann es vorteilhaft sein, die Hinterachslenkung zu deaktivieren und in Mittelstellung zu arretieren, um das Fahrverhalten des Fahrzeugs bei hohen Geschwindigkeiten zu stabilisieren. Hierzu dient in beiden Fällen eine Sicherheitsschaltung mit einer Ventilanordnung 20, deren Funktion nachfolgend anhand der Figuren erläutert wird.

Die Sicherheitsschaltung ermöglicht eine wechselweise Entlastung eines der Arbeitsräume 11a, 11b zu einem Tankanschluss T hin sowie eine hydraulische Zwangszentrierung des Hydraulikzylinders, indem der jeweils andere Arbeitsraum 11b, 11a mit einem Druckspeicher 30 verbunden wird.

Die Sicherheitsschaltung umfasst hierzu eine Ventilanordnung 20 mit zwei Teilschaltungen 20a, 20b. Die Teilschaltung 20a dient dazu, je nach Auslenkung des Kolbens einen der Arbeitsräume 11a, 11b mit dem Tankanschluss T zu verbinden, während die Teilschaltung 20a gleichzeitig den jeweils anderen Arbeitsraum mit dem Druckspeicher 30 verbindet. Jede der beiden Teilschaltungen 20a, 20b umfasst im Ausführungsbeispiel zwei normal geschlossene Ventile 21a, 21b und 21c, 21d, die jeweils entgegengesetzt zueinander angeordnet sind. In die Schaltventile 21a bis 21d sind in die Offenstellung jeweils Rückschlagventile 25 integriert, die lediglich einen Fluid vom Druckspeicher 30 in Richtung eines Arbeitsraums 11a, 11b bzw. von einem der Arbeitsräume 11a, 11b in Richtung Tankanschluss T erlauben.

Außerdem besitzt die Sicherheitsschaltung einen hydraulisch betätigten Aktuator 22, dessen Steuereingang über ein elektrisch geschaltetes Absperrventil 23 mit dem Tankanschluss T und über Rückschlagventile 24a, 24b mit den Druckanschlüssen P1, P2 des Ventilblocks 2 verbunden ist.

Die Betätigung der Schaltventile 21a, 21b sowie 21c, 21d erfolgt über die Kolbenstange 13, und zwar über einen in Umfangsrichtung umgestalteten Bereich 13b, der über einen Taster 19 (Tastelement), der wiederum die Schaltventile 21a bis 21d schaltet, mechanisch abgetastet wird. Zu diesem Zweck ist im Ausführungsbeispiel die innen hohle Kolbenstange 13 über den Kolben 12 hinaus in dem Arbeitsraum 11a verlängert und umgreift das Innenrohr 14a. Zu ihrem Ende hin ist der Außendurchmesser der verlängerten Kolbenstange 13 in ihrem umgestalteten Bereich 13b beispielsweise in zwei abgeschrägten Abstufungen reduziert. Alternativ wäre es natürlich auch möglich, in dem umgestalteten Bereich 13b nur eine einzige Rampe ohne "Zwischenpodest" vorzusehen. Der Aktuator 22 dient dazu, den Taster 19 im Normalbetrieb von der Kolbenstange 13 abzuheben und somit aus der Zusammenwirkung zu bringen und die Ventile 21a bis 21d in einen gesperrten Zustand zu schalten. Der Taster 19 ist im Ausführungsbeispiel in der Art einer Kolbenstange mit dem Aktuator 22 integriert. Möglich und von der Erfindung mit umfasst ist natürlich auch, dass Taster 19 und Aktuator 22 als separate Bauteile realisiert sind. Beispielsweise kann der Aktuator 22 auf eine seitliche Schulter des Tasters 19 wirken.

In Figur 1 ist der Normalbetrieb der hydraulischen Schaltung gezeigt. Hierzu liegt am Eingang P des Aktuators 22 ein Steuerdruck an, durch den der Aktuator 22 ausgefahren ist und damit den Taster 19 angehoben und außer Eingriff mit der Kolbenstange 13 gebracht hat. Die Ventile 21a und 21c sind unbetätigt und befinden sich somit in ihrem normal geschlossen Zustand. Die Ventile 21b und 21d besitzen eine dritte, geschlossene Schaltstellung, in die das jeweilige Schaltventil 21b, 21 über seine offene mittlere Schaltstellung hinaus von dem per Aktuator 22 ausgelenkten Taster 19 geschaltet ist. Somit ist keiner der Arbeitsräume 11a, 11b mit dem Tankanschluss T oder dem Druckspeicher 30 verbunden.

Im Fehler- oder Deaktivierungsfall öffnet wie bereits erläutert das Absperrventil 23, sodass der Druck am Steuereingang P des Aktuators 22 zum Tankanschluss T hin entweicht und der Aktuator unter Wirkung der integrierten Rückstellfeder einfährt. Der Taster 19 kommt somit wieder in Eingriff mit der Kolbenstange und schaltet die Ventilanordnung 20 in Abhängigkeit der Lage des Kolbens in einen der nachfolgenden Schaltzustände.

Befindet sich der Kolben in der Mittelstellung, so liegt der T-förmige Endbereich des Tasters 19, über den die Ventile 21a bis 21d jeweils geschaltet werden, genau in der Mittellage zwischen den beiden jeweils unbestätigten und somit geschlossenen Ventilen 21a und 21b sowie 21c und 21d. Der Taster 19 ist hierbei von der mittleren Stufe des umgestalteten Bereichs 13b der Kolbenstange 13. Keiner der Druckräume 11a, 11b ist über die Ventilanordnung 20 in Richtung des Tankanschlusses oder des Druckspeichers 30 verbunden, sodass der Kolben 12 in seiner Mittelstellung zwischen den Arbeitsräumen 11a, 11b eingespannt ist. In dieser Stellung kann die vom drucklosen Aktuator 18 aktivierte Sperrvorrichtung den Kolben zusätzlich mechanisch arretieren. Dies entspricht einer deaktivierten Hinterachslenkung im zentrierten Zustand, also dem sicheren Ausfallzustand der Lenkung.

Befindet sich der Kolben 12 hingegen in einer Kolbenstellung rechts der Mittellage, so wird der Taster 19 von dem umgestalteten Bereich 13b der Kolbenstange 13 nicht mehr ausgelenkt und befindet sich in seinem maximal eingefahrenen Zustand, der dem ersten Schaltzustand entspricht. In diesem Zustand sind die beiden oberen Schaltventile 21a und 21c von dem mit der Taste 19 verbundenen T-förmigen Schaltarm betätigt und befindet sich im offenen Zustand, sodass der Arbeitsraum 11a über das Schaltventil 21a zum Tankanschluss T und der Arbeitsraum 11a über das Schaltventil 21a zum Druckspeicher 30 verbunden ist. Die Schaltventile 21b und 21c sind unbetätigt und geschlossen. Indem nun der Druck aus dem Druckspeicher 30 auf den Kolbenraum 11b wirkt und der Arbeitsraum 11a zum Tankanschluss T verbunden ist, wird der Kolben solange in Richtung seiner Mittellage hin verstellt, bis er diese erreicht und dort arretiert wird.

Im umgekehrten Fall, wenn der Kolben 12 sich in einer Kolbenstellung links der Mittellage befindet, so wird der Taster 19 von dem größeren Durchmesser des umgestalteten Bereichs 13b der Kolbenstange 13 um zwei Schaltstufen ausgefahren ist. In dieser Stellung schaltet der mit der Taste 19 verbundene T-förmige Betätigungsarm die beiden unteren Schaltventile 21b und 21d in die betätigte, geöffnete Schaltstellung, sodass der Arbeitsraum 11b über das Ventil 21b mit dem Tankanschluss T und der Arbeitsraum 11a über das Ventil 21d mit dem Druckspeicher 30 verbunden ist. Somit bewegt sich der Kolben 12 solange nach rechts, bis er seine Mittellage erreicht und dort arretiert wird.

Wie aus Figur 1 zu entnehmen, sind die Pumpenanschlüsse P1, P2 des Hydraulikblocks 2 jeweils über ein hydraulisch geschaltetes, drucklos geschlossenes Absperrventil 31a, 31b mit den Druckanschlüssen 15a, 15b des Hydraulikzylinders 1 verbunden. Die Steueranschlüsse der beiden Ventile 31a, 31b sind mit dem Druckspeicher 30 verbunden. Die Absperrventil 31a, 31b sind so ausgelegt, dass sie erst bei einem voreingestellten Mindestdruckwert öffnen. Somit ist sichergestellt, dass der Hydraulikzylinder nach einer Inbetriebnahme der Schaltung erst dann ausgelenkt werden kann, wenn der Druckspeicher 30 auf den Mindestdruckwert aufgeladen wurde. Der Mindestdruckwert ist hierbei so gewählt, dass durch den Druckspeicher eine Rückstellbewegung des Kolbens 12 bei maximaler Auslenkung gewährleistet ist. In die Absperrventile 31a, 31b kann zusätzlich in der Öffnungsposition ein Rückschlagventil 26a, 26b integriert sein.

Außerdem sind die Druckanschlüsse 15a, 15b jeweils über ein vordruckgesteuertes Lasthalteventil 27a, 27b mit dem Tankanschluss verbunden. Die Steueranschlüsse der Lasthalteventile 27a, 27b sind über Kreuz jeweils mit dem entgegengesetzten Pumpenanschluss P1, P2 des Hydraulikblocks 2 verbunden. Im Normalbetrieb, bei bestromt geschlossenem Sicherheitsventil 23, kann somit eine Auslenkung des Kolbens 12 nach rechts bzw. links erfolgen, je nachdem, an welchem der Pumpenanschlüsse P1, P2 ein Arbeitsdruck angelegt wird.

Wird an dem Pumpenanschluss P1 beispielsweise ein Druck angelegt, so öffnet dieser über das Rückschlagventil 24b und den Steueranschluss 18' die Verriegelung des Hydraulikzylinders 1 und schaltet gleichzeitig den Aktuator 22 in den ausgelenkten Zustand, wodurch den Taster 19 aus der Zusammenwirkung mit dem umgestalteten Bereich 13b der Kolbenstange 13 angehoben wird. Die Ventilanordnung 20 ist somit in einem deaktivierten Zustand.

Gleichzeitig wird der Druckspeicher, der über Rückschlagventile 32a, 32b mit beiden Pumpenanschlüssen P1, P2 verbunden ist, auf den Betriebsdruck aufgeladen. Sobald der Ladezustand den Mindestdruckwert erreicht, öffnet das hydraulisch geschaltete Absperrventil 31a. Über das im Absperrventil 31a integrierte Rückschlagventil 26a wird nun an dem Druckeingang 15a des Hydraulikzylinders 1 Druck aufgebaut. Außerdem wird durch den Druck am Pumpenanschluss P1 das gegenseitige das Lasthalteventil 27b aufgesteuert und somit der Druckanschluss 15b des Arbeitsraums 11b in Richtung Tankanschluss T durchverbunden, sodass der Kolben 12 nach rechts verstellt werden kann. Umgekehrt kann durch einen Arbeitsdruck am Pumpenanschluss P2 der Kolben 12 in entsprechender Weise nach links verstellt werden.

Des Weiteren ist es vorteilhaft, wenn die Lasthalteventile 27a, 27b zusätzlich als Überdruckventile ausgebildet sind, die bei Überschreiten eines an einem mit dem jeweiligen Arbeitsraum 11a, 11b verbundenen Druckanschluss 15a, 15b anliegenden Maximaldruckwertes öffnen. Somit werden gefährliche Druckverhältnisse im Lenksystem, die zu einer Beschädigung oder einem Versagen führen könnten, vermieden. Ein gefährlicher Überdruck kann beispielsweise aufgrund einer von den Rädern auf den Lenkzylinder ausgeübten Kraft bei einer harten Bordsteinberührung auftreten. Die Überdruckentlastung über die Lasthalteventile 27a, 27b schützt hierbei die Mechanik der Achse sowie die Mechanik des Hydraulikzylinders 1 und somit die gesamte Hydrauliklenkung vor Schäden durch Überlastung.

Wird zur Deaktivierung der Hinterachslenkung die Schaltspannung des Sicherheitsventils 23 abgeschaltet oder fällt diese durch einen Fehler bei Ausfall des Bordnetzes aus, so schaltet das Sicherheitsventil 23 in den geöffneten Zustand und entlastet die zu dem Aktuator 22 und dem Steueranschluss 18' des Aktuators 18 führende Steuerleitung zum Tank hin. Somit wird der Aktuator 22 drucklos und kehrt unter Einwirkung seiner Rückstellfeder in die eingefahrene Stellung zurück, sodass der Taster 19 wieder in Eingriff mit dem umgestalteten Bereich 13b der Kolbenstange 13 gelangt. Somit sorgt die Ventilanordnung 20 dafür, dass der Kolben 12 durch den Druck im Druckspeicher 30 hydraulisch in Richtung seiner Mittelstellung verstellt wird.

Ist die Mittelstellung erreicht, so bewirkt die Feder im Federraum 18b des Aktuators 18, dass die Arretierhülse 16 nach links verstellt wird und über den Ringwulst 16a die Rastnasen 17 nach außen drücken, sodass diese in Eingriff mit der Ringnut 17a gelangen und den Kolben 12 in der Mittelstellung zusätzlich mechanisch arretieren.

Wird das Sicherheitsventil 23 durch Anlegen einer Schaltspannung wieder geschlossen, so kann sich am Steuereingang 18' und am Aktuator 22 wieder Druck aufbauen, sodass die Arretierhülse 16 nach rechts in ihre Entsperrstellung gestellt und den Taster 19 über den Aktuator 22 außer Eingriff mit der Kolbenstange 13 angehoben sowie die Ventile 21a, 21b in ihren geschlossenen vierten Schaltzustand verstellt werden. Die Hinterachslenkung ist somit wieder in Betrieb und kann durch Druckbeaufschlagung an den Pumpenanschlüssen P1, P2 nach rechts bzw. links verstellt werden.

Vorteile der erfindungsgemäßen Schaltung bestehen einerseits darin, dass lediglich ein einziges elektrisch geschaltetes Ventil 23 benötigt wird, um eine Zentrierung und gegebenenfalls Arretierung des Kolbens in der Mittelstellung zu aktivieren und zu deaktivieren, und dass anderseits die Ventilanordnung 20 über den Aktuator 22 hydraulisch außer Eingriff mit der Kolbenstange 13 gebracht wird, sodass die Schaltventile 21a bis 21d statt bei jedem einzelnen Lenkeinschlag nur einmal bei Inbetriebnahme des Fahrzeugs und erstmaligem Druckaufbau umgeschaltet werden. Hierdurch verringern sich die Lastzyklen während der typischen Lebensdauer des Fahrzeugs von mehreren Millionen mal auf lediglich ca. 10.000 mal. Somit entsteht weniger Verschleiß und die Lebensdauer der Ventilanordnung 20 verlängert sich entsprechend bzw. muss weniger robust und langlebig ausgelegt werden.

Alternativ kann jede der Teilschaltungen auch mit einem normal offenen und einem normal geschlossenen Ventil realisiert werden, welche jeweils zwischen einem der beiden Arbeitsräumen und der Tankrückleitung bzw. dem Druckspeicher angeordnet sind und von dem Tastelement gemeinsam geschaltet werden. Hierbei befinden sich in der ersten Schaltstellung der Ventilanordnung beide Ventile in ihrer unbetätigten, normal offenen bzw. normal geschlossenen Ventilstellung, in der zweiten Schaltstellung befindet sich das normal offene Ventil bereits in der betätigten, geschlossenen Ventilstellung. Das normal geschlossene Ventil befindet sich noch in der unbetätigten, geschlossen Ventileinstellung. In der dritten Schaltstellung befindet sich das normal offene Ventil in der umgeschalteten, geschlossenen Ventilstellung und das normal geschlossene Ventil befindet sich ebenfalls in der betätigten, offenen Ventilstellung.

Die vierte Schaltstellung kann dadurch realisiert werden, dass das normal offene Ventil sind in der betätigten, geschlossenen Ventilstellung befindet und das normal geschlossene Ventil in einer über seine offene Ventilstellung hinausgeschalteten geschlossenen Ventilstellung. Das normal geschlossene Ventil besitzt in diesem Fall also drei Ventilstellungen, nämlich die normal geschlossene, die offene und die über die offene hinausgeschaltete geschlossene Ventilstellung.

Die gemeinsame Betätigung der beiden Ventile kann realisiert werden, indem das normal offene Ventil über ein Federelement geschaltet wird, welches nach Erreichen der betätigten, geschlossenen Schaltstellung zum Ausgleich eines weiteren Hubwegs des Tastelements in der dritten und vierten Schaltstellung lediglich komprimiert wird, ohne dass das normal offene Ventil seine Ventilstellung ändert.

Eine kaskadierte Umschaltung des normal offenen und normal geschlossenen Ventils, sodass also das normal offene Ventil zum Erreichen der zweiten Schaltstellung bereits umgeschaltet, das normal geschlossene Ventil jedoch noch in der unbetätigten Ventilstellung ist, kann dadurch erreicht werden, dass in Bezug auf das normal geschlossene Ventil das Tastelement zunächst einen Leerhub ausführt.

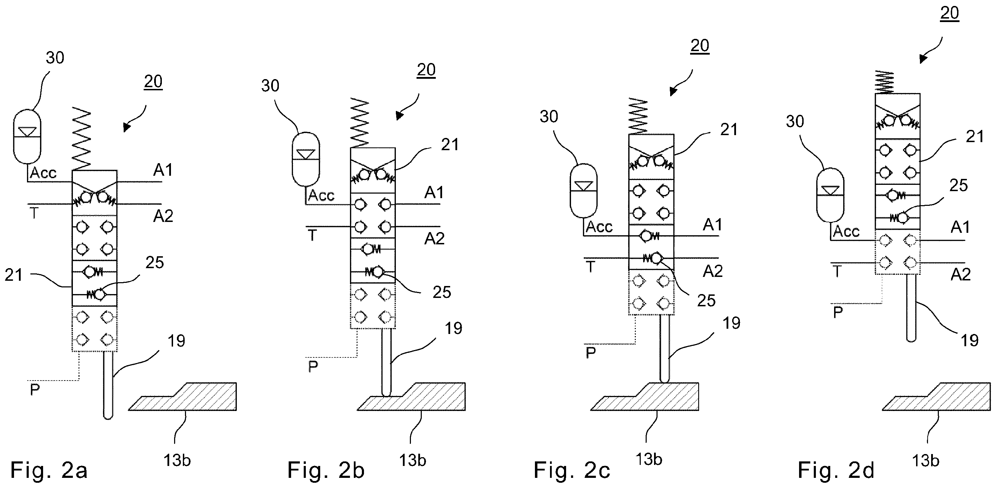

In den Figuren 2a bis 2d sind die vier Schaltzustände der Ventilanordnung 20 in einem zweiten Ausführungsbeispiel dargestellt, bei dem statt vier paarweise angeordneten Schaltventilen 21a bis 21d jede der Teilschaltungen 20a, 20b durch ein einziges Schaltventil 21e, 21f realisiert ist, welches jeweils als 3/4-Wegeventil ausgeführt ist. Die obere Hälfte der Figuren zeigt jeweils das Ventil 21f der für die Verbindung zum Druckspeicher zuständigen Teilschaltung 20b, während die untere Hälfte der Figuren jeweils das Ventil 21e zeigt, mit dem die Verbindung zwischen den Druckräumen 11a, 11b und dem Tankanschluss T geschaltet wird. Der Taster 19 ist lediglich in schematisch und in Bezug jeweils nur eines der beiden Schaltventile 21e, 21f gezeigt. Tatsächlich ist der Taster 19 jedoch ähnlich dem ersten Ausführungsbeispiel so ausgestaltet, dass er gleichzeitig beide Schaltventile 21e, 21f schalten kann.

Das Ventil 21e hat drei Anschlüsse, von denen zwei mit den Druckanschlüssen 15a, 15b des Hydraulikzylinders 1 und der dritte mit dem Tankanschluss T verbunden ist. Das Ventil 21f ist entsprechend an zwei Anschlüssen mit den Druckanschlüssen 15a, 15b des Hydraulikzylinders 1 und dem dritten Anschluss zum Tankanschluss T verbunden. Wie im ersten Ausführungsbeispiel auch, sind bei den Ventilen 21e, 21f in der ersten und dritten Schaltstellung wirksame Rückschlagventile 25 integriert.

Figur 2a zeigt die Schaltstellung bei ausgefahrener Kolbenstange. In dieser Stellung ist der mit dem Druckanschluss 15a verbundene Anschluss A1 des Schaltventils 21e mit dem Tankanschluss T verbunden. Gleichzeitig ist der mit dem Druckanschluss 15b verbundene Eingang A2 des zweiten Schaltventils 21f mit dem Druckspeicher verbunden. Somit wird die Kolbenstange in Richtung Mittelstellung eingefahren.

In der zweiten in Figur 2b gezeigten Schaltstellung befindet sich der Kolben in seiner Mittelstellung. Die beide Anschlüsse A1, A2 beider Schaltventile 21e, 21f sind jeweils gesperrt, sodass der Kolben sich nicht aus der Mittelstellung bewegen kann.

In der dritten in Figur 2c gezeigten Schaltstellung, die einer Auslenkung der Kolbenstange nach links entspricht, sind die beiden Ventils 21e, 21f jeweils in die dritte Schaltstellung umgeschaltet. In dieser ist der mit dem Druckanschluss 15b verbundene Anschluss A2 des Ventils 21e mit dem Tankanschluss T und der mit dem Druckanschluss 15a verbundene Anschluss A1 des Ventils 21f mit dem Druckspeicher 30 verbunden. Somit wird die Kolbenstange in Richtung ihrer Mittellage nach rechts verstellt.

In Figur 2d ist ein hydraulisch geschalteter Schaltzustand gezeigt, bei dem über einen Steuerdruck am Anschluss P die gestrichelt dargestellte vierte Schaltstellung erreicht ist, in welcher beide Anschlüsse A1, A2 beider Schaltventile 21e, 21f gesperrt sind. Der Aktuator 22 ist in diesem Ausführungsbeispiel der besseren Übersichtlichkeit halber nicht separat dargestellt und kann beispielsweise in die Schaltventils 21e, 21f integriert ausgeführt sein.

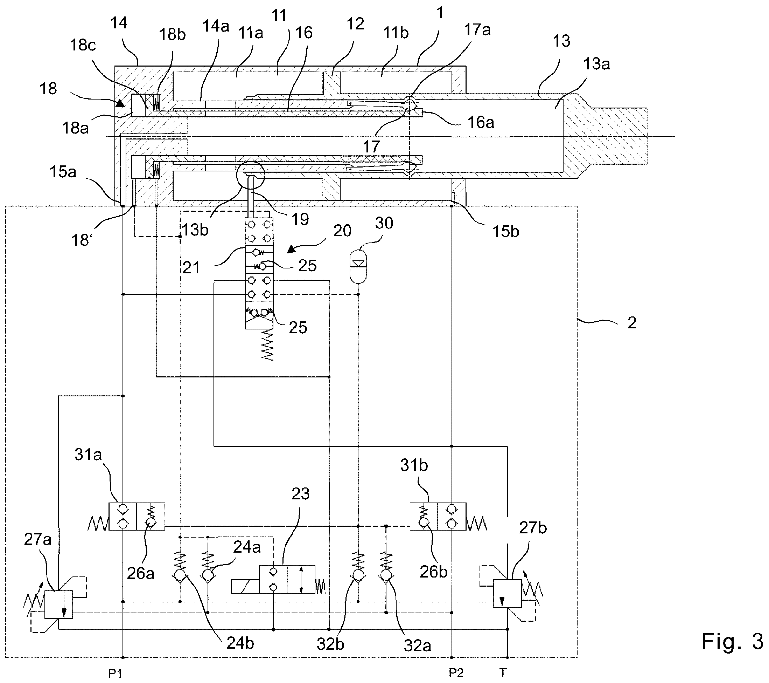

Ein drittes Ausführungsbeispiel, bei dem statt zwei symmetrisch aufgebauten Teilschaltungen 20a, 20b die Ventilanordnung 20 mit einem einzigen 4/4-Wegeventil 21 realisiert ist, ist in Figur 3 dargestellt.

Das 4/4-Wegeventil 21 besitzt vier Anschlüsse und weist vier Schaltstellungen auf. In der ersten und dritten Schaltstellung wirkt es jeweils als Umschalter zwischen den Arbeitsräumen 11a, 11b einerseits und Tankanschluss T sowie Druckspeicher 30 anderseits. In der zweiten und vierten Schaltstellung sind alle Anschlüsse des 4/4-Wegeventils 21 gesperrt. Wie im ersten Ausführungsbeispiel auch, sind bei dem Ventil 21 in der ersten und dritten Schaltstellung wirksame Rückschlagventile 25 integriert. Der Aktuator 22 ist in diesem Ausführungsbeispiel der besseren Übersichtlichkeit halber nicht separat dargestellt und kann beispielsweise in das Schaltventil 21 integriert ausgeführt sein. Daher ist lediglich die zugehörige Steuerleitung in Figur 3 gestrichelt dargestellt und direkt mit dem 4/4-Wegeventil 21 verbunden. Ansonsten entspricht die Schaltung aus Figur 3 in Aufbau und Funktion der in Figur 1 gezeigten.

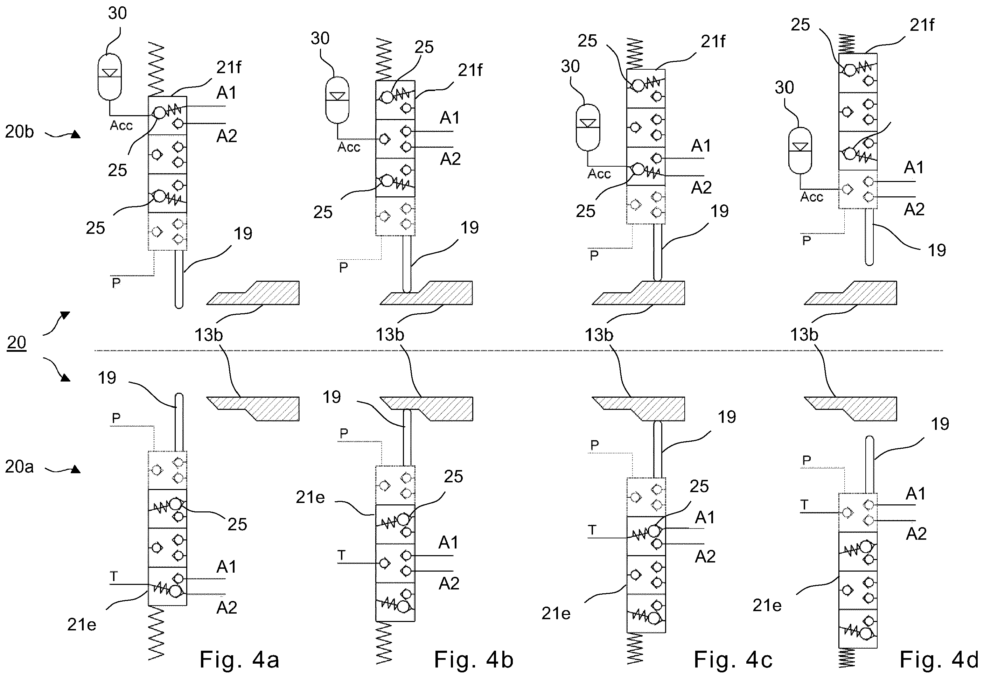

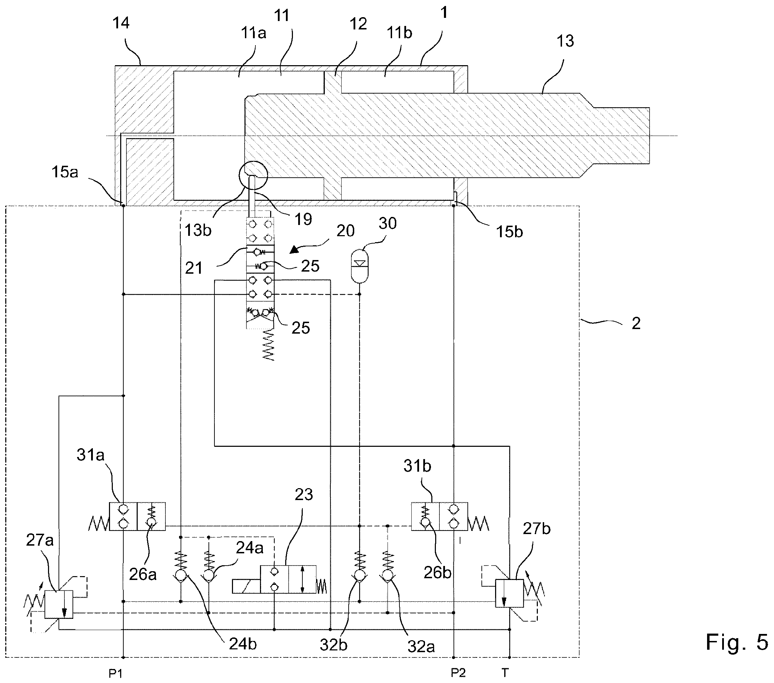

Die Figuren 4a bis 4d zeigen die vier Schaltstellungen des Ventils 21. Figur 5a zeigt wieder die Schaltstellung bei ausgefahrener Kolbenstange. In dieser Stellung ist der mit dem Druckanschluss 15a verbundene Anschluss A1 des Schaltventils 21 mit dem Tankanschluss T und der mit dem Druckanschluss 15b verbundene Anschluss A2 mit dem Druckspeicher verbunden.

In der zweiten in Figur 4b gezeigten Schaltstellung sind alle Anschlüsse des Ventils 21 gesperrt. In der dritten in Figur 5c gezeigten Schaltstellung, die einer Auslenkung der Kolbenstange nach links entspricht, ist das Ventil 21 in die dritte Schaltstellung umgeschaltet. In dieser ist der mit dem Druckanschluss 15b verbundene Anschluss A2 mit dem Tankanschluss T und der mit dem Druckanschluss 15a verbundene Anschluss A1 mit dem Druckspeicher 30 verbunden.

In Figur 4d ist ein hydraulisch geschalteter Schaltzustand gezeigt, bei dem über einen Steuerdruck am Anschluss P die vierte Schaltstellung erreicht ist, in welcher wieder alle Anschlüsse des 4/4-Wegeventils 21 gesperrt sind.

Der Vorteil eines integrierten Schaltventils 21 liegt darin, dass bauartbedingt eine Überschneidung der Schaltpunkte geometrisch ausgeschlossen ist. Somit können die erforderlichen Einbautoleranzen erheblich einfacher realisiert werden.

Die in den Figuren 1 und 3 gezeigte mechanische Sperrvorrichtung des Hydraulikzylinders ist in Hinblick auf die vorliegende Erfindung optional. In Figur 5 ist ein gegenüber Figur 3 vereinfachtes Ausführungsbeispiel dargestellt, bei dem ein einfacher Hydraulikzylinder ohne integrierte mechanische Sperrvorrichtung zum Einsatz kommt. Eine Arretierung in der Mittelstellung erfolgt in diesem Fall nur hydraulisch. Die Funktion der Schaltung entspricht der Schaltung aus Figur 3.

Die erfindungsgemäße Hydraulikschaltung wurde in den Ausführungsbeispielen im Hinblick auf eine Hinterachslenkung eines mehrachsigen Fahrzeugs (LKW, Trailer, Schwerlastkran, Baumaschine oder dergleichen) beschrieben.

## Patentansprüche

1. Hydraulische Schaltung, insbesondere für ein Lenksystem eines mehrachsigen Fahrzeugs, mit
einem Hydraulikzylinder (1), der einen Zylinderraum (11), einen dichtend in dem Zylinderraum (11) gelagerten Kolben (12), der den Zylinderraum (11) in zwei Arbeitsräume (11a, 11b) unterteilt, und mindestens eine von dem Kolben (12) getragene Kolbenstange (13) umfasst,
einer mit den Arbeitsräumen (11a, 11b) verbundenen, mechanisch schaltbaren Ventilanordnung (20) mit mindestens drei Schaltstellungen und einem mechanischen Tastelement (19), welches mit dem Kolben (12) oder der Kolbenstange (13) zusammenwirkt und ausgebildet ist, die Ventilanordnung (20) in Abhängigkeit der Auslenkung des Kolbens (12) zwischen den drei Schaltstellungen umzuschalten,
wobei die Ventilanordnung (20) ausgebildet ist, in einem ersten Schaltzustand eine ersten der Arbeitsräume (11a) mit einer Tankrückleitung (T) zu verbinden, um eine Rückstellbewegung des Kolbens (12) in eine sichere Ausfallstellung zu ermöglichen, in einer zweiten Schaltstellung, die der sicheren Ausfallstellung des Kolbens (12) entspricht, eine Verbindung zwischen den Arbeitsräumen (11a, 11b) und der Tankrückleitung (T) zu sperren und in einer dritten Schaltstellung den zweiten Arbeitsraum (11b) mit der Tankrückleitung (T) zu verbinden, um eine entgegengesetzte Rückstellbewegung des Kolbens (12) in die die sichere Ausfallstellung zu ermöglichen
**dadurch gekennzeichnet, dass**,
die hydraulische Schaltung einen Druckspeicher (30) aufweist, welcher im Normalbetrieb mit einem an einem Pumpenanschluss (P1, P2) der hydraulischen Schaltung anliegenden Druck aufgeladen wird, und
die Ventilanordnung (20) weiter ausgebildet ist, in dem ersten Schaltzustand den zweiten Arbeitsraum (11b) mit dem Druckspeicher (30) zu verbinden, um eine aktive Rückstellbewegung des Kolbens (12) in die eine sichere Ausfallstellung zu bewirken, in der zweiten Schaltstellung eine Verbindung zwischen den Arbeitsräumen (11a, 11b) und dem Druckspeicher (30) zu sperren und in der dritten Schaltstellung den ersten Arbeitsraum (11a) mit dem Druckspeicher (30) zu verbinden, um eine entgegengesetzte Rückstellbewegung des Kolbens (12) in die die sichere Ausfallstellung zu bewirken.

2. Hydraulische Schaltung nach Anspruch 1, bei der die Ventilanordnung (20) hydraulisch, pneumatisch und/oder elektrisch deaktivierbar ausgebildet ist.

3. Hydraulische Schaltung nach Anspruch 1 oder 2, bei der
die Ventilanordnung (20) eine vierte Schaltstellung aufweist, in der die Verbindung zwischen den Arbeitsräumen (11a, 11b) und der Tankrückleitung (T) sowie zwischen den Arbeitsräumen (11a, 11b) und dem Druckspeicher (30) gesperrt ist und
die hydraulische Schaltung einen vom Hydraulikzylinder (1) separaten hydraulischen Aktuator (22) aufweist, welcher ausgebildet ist, bei Ansteuerung das Tastelement (19) aus der Zusammenwirkung mit dem Kolben (12) oder der Kolbenstange (13) abzuheben und die Ventilanordnung (20) in die vierte Schaltstellung zu schalten.

4. Hydraulische Schaltung nach Anspruch 3 mit einem stromlos geöffneten Absperrventil (23), welches eine mit dem auf das Tastelement (19) wirkenden Aktuator (22) verbundene Steuerleitung mit einem Tankanschluss (T) verbindet und zur Deaktivierung der Ventilanordnung (20) stromlosgeschaltet werden kann.

5. Hydraulische Schaltung nach einem der vorangehenden Ansprüche, bei dem die Ventilanordnung (20) zwei vorzugsweise symmetrisch aufgebaute Teilschaltungen (20a, 20b) aufweist, von denen die erste Teilschaltungen (20a) in einem ersten und einem dritten Schaltzustand in Abhängigkeit der Auslenkung des Kolbens (12) jeweils einen der Arbeitsräume (11a, 11b) mit dem Tankanschluss (T) verbindet und gleichzeitig die andere Teilschaltungen (20b) den jeweils anderen der Arbeitsräume (11b, 11a) mit dem Druckspeicher (30) verbindet.

6. Hydraulische Schaltung nach Anspruch 5, bei der jeder der Teilschaltungen (20a, 20b) ein normal offenes und ein normal geschlossenes Schaltventil, zwei gegensinnig angeordnete, normal geschlossene Schaltventile oder ein 3/4 -Wegeventil mit drei Anschlüssen und vier Schaltstellungen aufweisen.

7. Hydraulische Schaltung nach einem der Ansprüche 1 bis 4, bei dem die Ventilanordnung (20) ein 4/4-Wegeventil mit mindestens vier Anschlüssen und vier Schaltstellungen aufweist, das in der ersten und dritten Schaltstellung als Umschalter zwischen den Arbeitsräumen (11a, 11b) einerseits und Tankanschluss (T) und Druckspeicher (30) anderseits wirkt und in der zweiten und vierten Schaltstellung die Verbindung zwischen den Arbeitsräumen (11a, 11b) und Tankanschluss (T) sowie Druckspeicher (30) sperrt.

8. Hydraulische Schaltung nach einem der vorangehenden Ansprüche, bei dem in einer zu dem Hydraulikzylinder (1) führenden Druckleitung ein hydraulisch geschaltetes, drucklos geschlossenes Absperrventil (31) angeordnet ist, welches an seinem Steueranschluss mit dem Druckspeicher (30) verbunden ist und erst öffnet, wenn der Druckspeicher (30) auf einen Mindestdruckwert aufgeladen ist, der eine Rückstellbewegung des Kolbens (12) bei maximaler Auslenkung gewährleistet.

9. Hydraulische Schaltung nach einem der vorangehenden Ansprüche, bei der
von jedem der beiden Arbeitsräume (11a, 11b) jeweils eine Rückleitung zu dem Tankanschluss (T) führt und in jeder der Rückleitungen ein hydraulisch entsperrbares Ventil (27a, 27b), insbesondere Lasthalteventil, angeordnet ist, und
die hydraulisch entsperrbaren Ventile (27a, 27b) als vordruckgesteuerte Ventile ausgebildet sind, deren Steueranschluss jeweils mit einer von einem zu dem jeweils anderen Arbeitsraum (11b, 11a) führenden Pumpenanschluss (P1, P2) verbunden ist.

10. Hydraulische Schaltung nach einem der vorangehenden Ansprüche, bei der der Hydraulikzylinder (1) mit einer mechanischen Sperrvorrichtung (16, 16a, 17, 17a) versehen ist, die den Kolben (12) bei Erreichen der sicheren Ausfallstellung innerhalb des Hydraulikzylinder (1) arretiert.

11. Hydraulische Schaltung nach Anspruch 10, bei der
die Sperrvorrichtung (16, 16a, 17, 17a) mindestens ein Sperrglied (17) aufweist, welches in gesperrtem Zustand von einem Verriegelungselement (16, 16a) in einer Einrastposition (17a) gehalten wird, und
wobei das Verriegelungselement (16a) über einen zweiten, von Kolben (12) und Kolbenstange (13) separaten, hydraulisch betätigten Aktuator (18) zwischen einer Sperrstellung, in der das Verriegelungselement (16, 16a) das Sperrglied (17) in der Einrastposition (17a) hält, und einer Entsperrstellung, in der das Verriegelungselement (16, 16a) das Sperrglied (17) freigibt, verstellbar ist.

12. Hydraulische Schaltung nach Anspruch 11, bei der die Steuereingänge des ersten, auf das Tastelement (19) wirkenden Aktuators (22) und des zweiten, auf das Verriegelungselement (16, 16a) wirkenden Aktuators (18) miteinander verbunden sind und mit demselben Steuerdruck beaufschlagt werden.

13. Hydraulische Schaltung nach einem der vorangehenden Ansprüche bei der die Ventilanordnung (20) gegebenenfalls mit weiteren hydraulischen Schaltungselementen in einen mit dem Hydraulikzylinder (1) in baulicher Einheit verbundenen Ventilblock (2) integriert sind.

## Claims

1. Hydraulic circuit, in particular for a steering system of a multi-axle vehicle, with
a hydraulic cylinder (1) which comprises a cylinder chamber (11), a piston (12) sealingly mounted in the cylinder chamber (11) and dividing the cylinder chamber (11) into two working chambers (11a, 11b), and at least one piston rod (13) carried by the piston (12),
a mechanically switchable valve arrangement (20) which is connected to the working chambers (11a, 11b) with at least three switching positions and a mechanical probe element (19), which interacts with the piston (12) or the piston rod (13) and is configured to switch the valve arrangement (20) between the three switching positions depending on the deflection of the piston (12),
wherein the valve arrangement (20) is configured, in a first switching state, to connect a first of the working chambers (11a) to a tank return line (T) to enable a return movement of the piston (12) into a safe fail position, in a second switching position, which corresponds to the safe fail position of the piston (12), to block a connection between the working chambers (11a, 11b) and the tank return line (T) and, in a third switching position, to connect the second working chamber (11b) to the tank return line (T) to enable an opposite return movement of the piston (12) into the safe fail position,
**characterized in that**
the hydraulic circuit has a pressure store (30) which during normal operation is loaded with a pressure applied at a pump port (P1, P2) of the hydraulic circuit, and
the valve arrangement (20) is further configured, in the first switching state, to connect the second working chamber (11b) to the pressure store (30) to cause an active return movement of the piston (12) into the one safe fail position, in the second switching position, to block a connection between the working chambers (11a, 11b) and the pressure store (30) and, in the third switching position, to connect the first working chamber (11a) to the pressure store (30) in to cause an opposite return movement of the piston (12) into the safe fail position.

2. Hydraulic circuit according to claim 1, in which the valve arrangement (20) is configured to be able to be hydraulically, pneumatically and/or electrically deactivated.

3. Hydraulic circuit according to claim 1 or 2, in which
the valve arrangement (20) has a fourth switching position in which the connection between the working chambers (11a, 11b) and the tank return line (T), as well as between the working chambers (11a, 11b) and the pressure store (30) is blocked, and
the hydraulic circuit has a hydraulic actuator (22) separate from the hydraulic cylinder (1), which is configured, when actuated, to disengage the probe element (19) from interaction with the piston (12) or the piston rod (13), and to switch the valve arrangement (20) into the fourth switching position.

4. Hydraulic circuit according to claim 3, with a de-energized open shut-off valve (23), which connects a control line connected with the actuator (22) acting on the probe element (19) to a tank port (T) and which can be switched into a de-energized state to deactivate the valve arrangement (20).

5. Hydraulic circuit according to any one of the preceding claims, in which the valve arrangement (20) has two preferably symmetrically constructed part-circuits (20a, 20b), of which the first part-circuit (20a) in a first and a third switching state depending on the deflection of the piston (12) connects one of the working chambers (11a, 11b) to the tank port (T) in each case and at the same time the other part-circuit (20b) connects the other of the working chambers (11b, 11a) to the pressure store (30).

6. Hydraulic circuit according to claim 5, in which each of the part-circuits (20a, 20b) has a normally open and normally closed switching valve, two oppositely arranged, normally closed switching valves or a 3/4-way valve having three ports and four switching positions.

7. Hydraulic circuit according to any one of claims 1 to 4, in which the valve arrangement (20) has a 4/4-way valve with at least four ports and four switching positions, which in the first and third switching positions acts as a switch between the working chambers (11a, 11b), on the one hand, and tank port (T) and pressure store (30), on the other hand, and in the second and fourth switching positions blocks the connection between the working chambers (11a, 11b) and the tank port (T), as well as pressure store (30).

8. Hydraulic circuit according to any one of the preceding claims, in which a shut-off valve (31), which is hydraulically switched and closed in a depressurized state, is arranged in a pressure line leading to the hydraulic cylinder (1), which is connected at a control port to the pressure store (30) and opens only when the pressure store (30) is charged to a minimum pressure value which ensures a return movement of the piston (12) with maximum deflection.

9. Hydraulic circuit according to any one of the preceding claims, in which
a return line leads from each of the two working chambers (11a, 11b) to the tank port (T) and a hydraulically unblockable valve (27a, 27b), in particular a load-holding valve, is arranged in each of the return lines, and
the hydraulically unblockable valves (27a, 27b) are configured as pilot-pressure-controlled valves, each having a control port connected to a pump port (P1, P2) leading from one to the respective other working chamber (11b, 11a).

10. Hydraulic circuit according to any one of the preceding claims, in which the hydraulic cylinder (1) is provided with a mechanical blocking device (16, 16a, 17, 17a) which locks the piston (12) within the hydraulic cylinder (1) when the safe fail position is reached.

11. Hydraulic circuit according to claim 10, in which
the blocking device (16, 16a, 17, 17a) has at least one blocking member (17) which, in the blocked state, is held in a latching position (17a) by a locking element (16, 16a), and
wherein the locking element (16a) is adjustable by a second hydraulically actuated actuator (18), which is separate from the piston (12) and piston rod (13), between a blocking position, in which the locking element (16, 16a) holds the blocking member (17) in the latching position (17a), and an unblocking position, in which the locking element (16, 16a) releases the blocking member (17).

12. Hydraulic circuit according to claim 11, in which the control inputs of the first actuator (22), which acts on the probe element (19), and the second actuator (18), which acts on the locking element (16, 16a), are connected to one another and are subjected to the same control pressure.

13. Hydraulic circuit according to any one of the preceding claims, in which the valve arrangement (20) is optionally integrated, together with additional hydraulic circuit elements, into a valve block (2) that is connected to the hydraulic cylinder (1) as a structurally integrated unit.

## Revendications

1. Circuit hydraulique, en particulier pour un système de direction d'un véhicule à essieux multiples, avec
un vérin hydraulique (1), qui comprend une chambre de vérin (11), un piston (12) monté de manière étanche dans la chambre de vérin (11), qui divise la chambre de vérin (11) en deux chambres de travail (11a, 11b), et au moins une tige de piston (13) portée par le piston (12),
un agencement de vanne (20) commutable mécaniquement connecté aux chambres de travail (11a, 11b) avec au moins trois positions de commutation, et un élément de touche mécanique (19), lequel coopère avec le piston (12) ou la tige de piston (13) et est conçu pour commuter l'agencement de vanne (20) entre les trois positions de commutation en fonction de la déviation du piston (12),
dans lequel l'agencement de vanne (20) est réalisé pour raccorder, dans un premier état de commutation, un premier des chambres de travail (11a) à une conduite de retour de réservoir (T) pour permettre un mouvement de retour du piston (12) dans une position de défaillance sûre, dans une deuxième position de commutation qui correspond à la position de défaillance sûre du piston (12) pour bloquer une connexion entre les chambres de travail (11a, 11b) et la conduite de retour de réservoir (T) et dans une troisième position de commutation pour connecter la deuxième chambres de travail (11b) à la conduite de retour de réservoir (T) pour permettre un mouvement de retour opposé du piston (12) dans la position de défaillance sûre
**caractérisé en ce que**
le circuit hydraulique présente un accumulateur de pression (30), lequel, en fonctionnement normal, est chargé avec une pression appliquée à un raccord de pompe (P1, P2) du circuit hydraulique, et
l'agencement de vanne (20) est en outre conçu pour connecter, dans le premier état de commutation, la deuxième chambre de travail (11b) avec l'accumulateur de pression (30) pour provoquer un mouvement de rappel actif du piston (12) dans une position de défaillance sûre, dans la deuxième position de commutation, une connexion entre les chambres de travail (11a, 11b) et l'accumulateur de pression (30) et, dans la troisième position de commutation, connecter la première chambre de travail (11a) à l'accumulateur de pression (30) pour provoquer un mouvement de rappel opposé du piston (12) dans la position de défaillance sûre.

2. Circuit hydraulique selon la revendication 1, dans lequel l'agencement de vanne (20) est conçu de manière désactivable hydrauliquement, pneumatiquement et/ou électriquement.

3. Circuit hydraulique selon la revendication 1 ou 2, dans lequel
l'agencement de vanne (20) présente une quatrième position de commutation dans laquelle la connexion entre les chambres de travail (11a, 11b) et la conduite de retour de réservoir (T) ainsi qu'entre les chambres de travail (11a, 11b) et l'accumulateur de pression (30) est bloquée et
le circuit hydraulique présente un actionneur hydraulique (22) séparé du vérin hydraulique (1), lequel est conçu, lors de la commande, pour lever l'élément de touche (19) de la coopération avec le piston (12) ou la tige de piston (13) et pour commuter l'agencement de vanne (20) dans la quatrième position de commutation.

4. Circuit hydraulique selon la revendication 3, avec une vanne de blocage (23) ouverte hors tension qui connecte une conduite de commande connectée à l'actionneur (22) agissant sur l'élément de touche (19) à un raccord de réservoir (T) et peut être mise hors tension pour désactiver l'agencement de vanne (20).

5. Circuit hydraulique selon l'une quelconque des revendications précédentes, dans lequel l'agencement de vanne (20) présente deux circuits partiels (20a, 20b) de préférence symétriques, dont le premier circuit partiel (20a) dans un premier et un troisième état de commutation en fonction de la déviation du piston (12) connecte une des chambres de travail (11a, 11b) au raccord de réservoir (T) et simultanément l'autre circuit partiel (20b) connecte l'autre des chambres de travail (11b, 11a) à l'accumulateur de pression (30).

6. Circuit hydraulique selon la revendication 5, dans lequel chacun des circuits partiels (20a, 20b) présente une vanne de commutation normalement ouverte et une vanne de commutation normalement fermée, deux vannes de commutation normalement fermées disposées en sens inverse ou une vanne à 3/4 voies avec trois raccords et quatre positions de commutation.

7. Circuit hydraulique selon l'une quelconque des revendications 1 à 4, dans lequel l'agencement de vanne (20) présente une vanne à 4/4 voies avec au moins quatre raccords et quatre positions de commutation qui, dans la première et la troisième position de commutation, agit en tant que commutateur entre les chambres de travail (11a, 11b) d'une part et le raccord de réservoir (T) et l'accumulateur de pression (30) d'autre part, et qui, dans les deuxième et quatrième positions de commutation, bloque la connexion entre les chambres de travail (11a, 11b) et le raccord de réservoir (T) ainsi que l'accumulateur de pression (30).

8. Circuit hydraulique selon l'une quelconque des revendications précédentes, dans lequel, dans une conduite de pression menant au vérin hydraulique (1), une vanne de blocage (31) à commande hydraulique est disposée, fermée sans pression, laquelle est connectée à l'accumulateur de pression (30) au niveau de son raccord de commande et ne s'ouvre que lorsque l'accumulateur de pression (30) est chargé à une valeur de pression minimale garantissant un mouvement de rappel du piston (12) à la déviation maximale.

9. Circuit hydraulique selon l'une quelconque des revendications précédentes, dans lequel
une conduite de retour mène de chacune des deux chambres de travail (11a, 11b) respectivement au raccord de réservoir (T) et une vanne à déblocage hydraulique (27a, 27b), en particulier une vanne de maintien de charge, est disposée dans chacune des conduites de retour, et
les vannes à déblocage hydraulique (27a, 27b) sont conçues en tant que vannes commandées par pression d'admission, dont le raccord de commande est connecté à un raccord de pompe (P1, P2) menant à l'autre chambre de travail (11b, 11a) respective.

10. Circuit hydraulique selon l'une quelconque des revendications précédentes, dans lequel
le vérin hydraulique (1) est doté d'un dispositif de blocage mécanique (16, 16a, 17, 17a) qui arrête le piston (12) à l'intérieur du vérin hydraulique (1) lorsque la position de défaillance sûre est atteinte.

11. Circuit hydraulique selon la revendication 10, dans lequel
le dispositif de blocage (16, 16a, 17, 17a) présente au moins un organe de blocage (17), lequel, à l'état bloqué, est maintenu dans une position d'encliquetage (17a) par un élément de verrouillage (16, 16a), et
dans lequel l'élément de verrouillage (16a) est connecté par l'intermédiaire d'un deuxième actionneur (18) actionné hydrauliquement séparé du piston (12) et de la tige de piston (13) entre une position de blocage, dans laquelle l'élément de verrouillage (16, 16a) maintient l'organe de blocage (17) dans la position d'encliquetage (17a), et une position de déblocage, dans laquelle l'élément de verrouillage (16, 16a) libère l'organe de blocage (17).

12. Circuit hydraulique selon la revendication 11, dans lequel les entrées de commande du premier actionneur (22) agissant sur l'élément de touche (19) et du deuxième actionneur (18) agissant sur l'élément de verrouillage (16, 16a) sont connectées entre elles et sont soumises à la même pression de commande.

13. Circuit hydraulique selon l'une quelconque des revendications précédentes dans lequel l'agencement de vanne (20) est intégré, le cas échéant avec des éléments de circuit hydraulique supplémentaires, dans un bloc de vannes (2) connecté au vérin hydraulique (1) en une unité de construction.
